# EUROPEAN PATENT APPLICATION

(11) **EP 3 012 715 A1**
(43) Date of publication of application: **27.04.2016**
(21) Application number: 14813069.3
(22) Date of filing: 27.03.2014
(51) Int. Cl.: G06F 3/041, G06F 3/0488

(54) **ELECTRONIC DEVICE, METHOD FOR RECEIVING INPUT, AND PROGRAM**

(30) Priority: 21.06.2013 JP 2013130559
(71) Applicant: NEC Solution Innovators, Ltd., Tokyo 136-8627 (JP)
(72) Inventor: NAKAO, Yusuke, Tokyo 136-8627 (JP)
(74) Representative: Vossius & Partner Patentanwälte Rechtsanwälte mbB
(86) International application number: PCT/JP2014/058842
(87) International publication number: WO 2014/203582

(57) **Abstract**

Provided is an electronic device (10) including a touch panel (11), an operation detection unit (12) that detects an operation through the touch panel (11), and an input specifying unit (13) that specifies an input operation on the basis of the operation detected by the operation detection unit (12). The operation detection unit (12) detects a first operation of maintaining a state where the touch panel (11) is touched, and a second operation of touching another position on the touch panel (11) while maintaining a position and a state of the first operation. The input specifying unit (13) calculates a direction on the basis of a position touched by the first operation and a position touched by the second operation in accordance with the detection of the second operation by the operation detection unit (12), and specifies an input operation having direction information calculated.

## Description

### TECHNICAL FIELD

The present invention relates to an electronic device, an input receiving method, and a program.

### BACKGROUND ART

Electronic devices including a touch panel have become widespread.

A related technique is disclosed in Patent Document 1. An electronic device disclosed in Patent Document 1 has an operation surface, and includes an input unit that outputs a signal corresponding to a contact position of an operation body coming into contact with the operation surface, a display unit that has a display region for displaying information, and a control unit that detects the contact position on the basis of the signal from the input unit and performs processing for displaying at least a portion of the information in the display region of the display unit on the basis of the detected contact position. When the control unit detects that the operation body has moved in a predetermined direction on the operation surface of the input unit on the basis of temporal changes in the signal corresponding to the contact position, the control unit performs processing for moving a portion of information to be displayed in the display region of the display unit in a direction opposite to the predetermined direction by a first movement amount having a length which is equal to or shorter than a total width of the display region of the display unit in the predetermined direction. In addition, when the control unit detects the movement of the operation body in the direction opposite to the predetermined direction during the processing for moving the portion by the first movement amount or within a predetermined period of time since the termination of the processing for moving the portion by the first movement amount, the control unit performs processing for moving the portion of the information to be displayed in the display region of the display unit in the predetermined direction by a second movement amount having a length which is shorter than that of the first movement amount.

### RELATED DOCUMENT

### PATENT DOCUMENT

[Patent Document 1] Japanese Unexamined Patent Publication No. 2013-93011

### DISCLOSURE OF THE INVENTION

The inventor has found a new problem in an electronic device including a touch panel. Operations through the touch panel include operations, such as, for example, a dragging operation, a flicking operation, a pinch-in operation, and a pinch-out operation, of sliding an operation body (for example, an operator's finger) on a touch panel to perform an input including direction information. In general, a display object on a screen is moved in a predetermined direction by the operation, or is enlarged or reduced.

However, an operation body may not be smoothly slid on the touch panel depending on a surface state of the operation body. For example, when an operator having put a rubber glove on his or her hand operates his or her finger as an operation body in this state, smooth sliding is not performed due to friction resistance between the surface of the touch panel and the surface of the glove. In addition, smooth sliding of the operation body such as a finger may not be performed due to foreign substances adhering to the surface of the operation body. As means for solving such a problem, improving the surface state of the operation body before an operation may be considered. For example, in the case of the rubber glove, it is possible to improve the surface state of the operation body (finger) by taking off the rubber glove before an operation. In addition, when foreign substances adhere to the surface of the operation body, it is possible to improve the surface state of the operation body (finger) by removing the foreign substances before an operation. However, there are operators who feel troubled in performing work of taking off the rubber glove for the operation or removing the foreign substances on the surface of the operation body.

Consequently, an object of the present invention is to provide a new technique for performing an input including direction information through a touch panel.

According to the present invention, there is a provided an electronic device including: a touch panel; an operation detection unit that detects an operation through the touch panel; and an input specifying unit that specifies an input operation on the basis of the operation detected by the operation detection unit, wherein the operation detection unit detects a first operation of maintaining a state where the touch panel is touched, and a second operation of touching another position on the touch panel while maintaining a position and a state of the first operation, and wherein the input specifying unit calculates a direction on the basis of a position touched by the first operation and a position touched by the second operation in accordance with the detection of the second operation by the operation detection unit, and specifies an input operation having direction information calculated.

In addition, according to the present invention, provided is a program for an electronic device including a touch panel, the program causing a computer to function as an operation detection unit that detects an operation through the touch panel, and an input specifying unit that specifies an input operation on the basis of the operation detected by the operation detection unit; causing the operation detection unit to detect a first operation of maintaining a state where the touch panel is touched and a second operation of touching another position on the touch panel while maintaining a position and a state of the first operation; and causing the input specifying unit to calculate a direction on the basis of a position touched by the first operation and a position touched by the second operation in accordance with the detection of the second operation by the operation detection unit and to specify an input operation having direction information calculated.

In addition, according to the present invention, provided is an input receiving method of causing an electronic device including a touch panel to perform an operation detection process of detecting an operation through the touch panel, and an input specifying process of specifying an input operation on the basis of the operation detected in the operation detection process. In the operation detection process, a first operation of maintaining a state where the touch panel is touched and a second operation of touching another position on the touch panel while maintaining a position and a state of the first operation are detected. In the input specifying process, a direction is calculated on the basis of a position touched by the first operation and a position touched by the second operation in accordance with the detection of the second operation in the operation detection process, and an input operation having direction information calculated is specified.

According to the present invention, a new technique of performing an input including direction information through a touch panel is realized.

### BRIEF DESCRIPTION OF THE DRAWINGS

The above-mentioned objects, other objects, features and advantages will be made clearer from the preferred exemplary embodiments described below, and the following accompanying drawings.

FIG. 1 is a schematic diagram illustrating an example of a hardware configuration of an electronic device of the present exemplary embodiment.
FIG. 2 is a diagram illustrating an example of a functional block diagram of the electronic device of the present exemplary embodiment.
FIG. 3 is a diagram illustrating an operation detected by the electronic device of the present exemplary embodiment, and information which is calculated on the basis of the operation.
FIG. 4 is a diagram illustrating an operation detected by an electronic device of the present exemplary embodiment, and information which is calculated on the basis of the operation.
FIG. 5 is a diagram illustrating an operation detected by an electronic device of the present exemplary embodiment, and information which is calculated on the basis of the operation.
FIG. 6 is a diagram illustrating an operation detected by an electronic device of the present exemplary embodiment, and information which is calculated on the basis of the operation.
FIG. 7 is a diagram illustrating an operation detected by the electronic device of the present exemplary embodiment, and information which is calculated on the basis of the operation.

### DESCRIPTION OF EXEMPLARY EMBODIMENTS

Hereinafter, exemplary embodiments of the present invention will be described with reference to the accompanying drawings.

Meanwhile, an electronic device of the present exemplary embodiment and each unit included in the electronic device are realized by an arbitrary combination of hardware and software on the basis of a central processing unit (CPU), a memory, a program loaded into the memory (including a program which has been stored in the memory in advance from when shipping out the device and a program which is downloaded from a storage medium such as a compact disc (CD), or a server or the like on the Internet) of an arbitrary computer, a storage unit such as a hard disk which stores the program, and an interface for network connection. In addition, one skilled in the art can understand that various modifications can be made to examples for realizing the method and device.

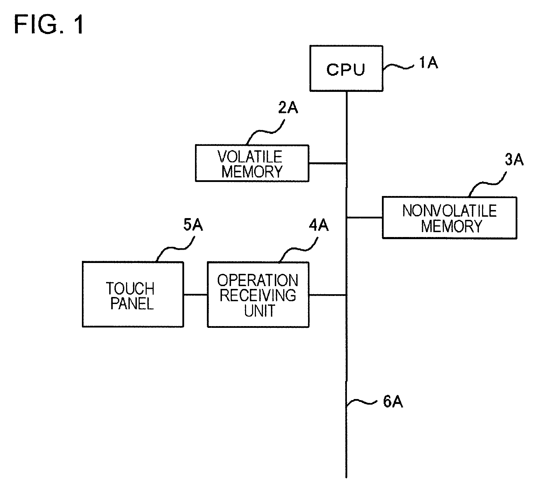

FIG. 1 is a schematic diagram illustrating an example of a hardware configuration of an electronic device of the present exemplary embodiment. As illustrated in the drawing, the device of the present exemplary embodiment includes, for example, a CPU 1A, a volatile memory 2A, a nonvolatile memory 3A, an operation receiving unit 4A, a touch panel 5A, and the like which are connected to each other through a bus 6A. Meanwhile, although not shown in the drawing, the device may include input devices such as operation keys, operation buttons, a switch, and a jog dial, and other elements such as a microphone, a speaker, a communication unit, an auxiliary storage device, and a camera.

The CPU 1A controls the overall electronic device together with each element. The nonvolatile memory 3A includes an area for storing a program for operating the electronic device, various types of application programs, various types of setting data used when the programs operate, and the like. The volatile memory 2A includes an area for temporarily storing data such as a work area for operating a program. The operation receiving unit 4A receives a user's input which is performed by an operator operating the touch panel 5A. The touch panel 5A may function as a display that displays information.

Functional block diagrams used in the following description of the exemplary embodiment indicate function-based blocks. In the functional block diagrams, a description is given such that each device is realized by one piece of equipment, but the realization means thereof is not limited thereto. That is, each device may be configured to be physically or logically divided.

### <First Exemplary Embodiment>

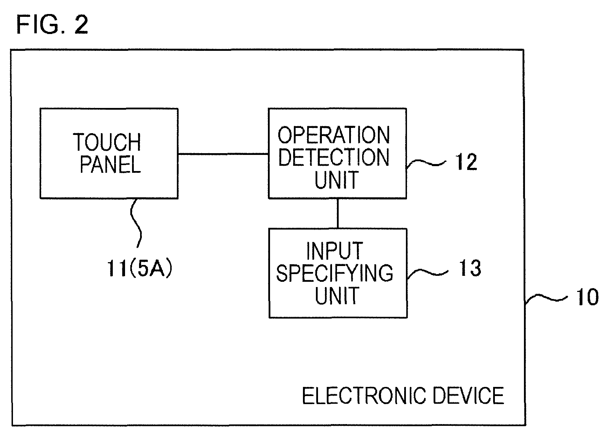

FIG. 2 illustrates an example of a functional block diagram of an electronic device 10 of the present exemplary embodiment. As illustrated in the drawing, the electronic device 10 of the present exemplary embodiment includes a touch panel 11, an operation detection unit 12, and an input specifying unit 13.

The type of touch panel 11 is not particularly limited, and any type such as a resistive film type, an infrared type, a capacitive type, a surface acoustic wave type, and an electromagnetic induction type may be adopted. The touch panel 11 may function as a display that displays information.

The operation detection unit 12 detects an operation through the touch panel 11. For example, the operation detection unit 12 detects a contact (touch) of an operation body (for example, an operator's finger) with a predetermined position on the touch panel 11, the maintenance of a contact (touch) with a predetermined position on the touch panel 11 by an operation body, the release of a contact (touch) with a predetermined position on the touch panel 11 by an operation body (separation of a contacting operation body from the touch panel 11), and the like. When these operations are detected, the operation detection unit 12 inputs a signal indicating detection contents (for example, coordinates information for specifying a position on the touch panel, and action contents) to the input specifying unit 13 in real time.

The input specifying unit 13 specifies an operator's input operation on the basis of an operation detected by the operation detection unit 12. The input specifying unit 13 may store a history for a fixed period of time of the operation detected by the operation detection unit 12 and may specify an operator's input operation using the history. A computer of the electronic device 10 executes a predetermined process on the basis of the input operation specified by the input specifying unit 13. That is, when the operation detection unit 12 detects an operation and the input specifying unit 13 specifies an input operation on the basis of the detected operation, the computer of the electronic device 10 executes a predetermined process in accordance with the specified input operation. For example, an image displayed on the touch panel 11 is scrolled, or is enlarged or reduced in accordance with the specified input operation. Meanwhile, the predetermined process executed by the computer of the electronic device 10 in accordance with the specified input operation is not limited thereto.

For example, the input specifying unit 13 specifies an input operation of touching a predetermined position on the touch panel 11, an input operation of touching a plurality of predetermined positions separated from each other at substantially the same time, an input operation of maintaining a touch of a predetermined position for a predetermined period of time, an input operation of releasing a touch of a predetermined position before a predetermined period of time elapses, an input operation of releasing a touch of a predetermined position after the touch is maintained for a predetermined period of time, an input operation of touching another position while a touch of a predetermined position is maintained, an input operation of sliding a touch position in a predetermined direction by a predetermined distance, a combination of these operations, and other operations, on the basis of the operation detected by the operation detection unit 12. In addition, when the input specifying unit 13 specifies the input operation of touching another position while a touch of a predetermined position is maintained, the input specifying unit may calculate a direction and a distance on the basis of a plurality of positions touched, and may specify the input operation as an input operation including the pieces of direction and distance information. Further, when the input specifying unit 13 specifies the input operation of touching another position while a touch of a predetermined position is maintained, the input specifying unit may calculate a time between when a first position is touched and when another position is touched and a time during which the touch of another position is maintained, and may specify the input operation as an input operation including the time information.

Meanwhile, the input specifying unit 13 may further specify input operations such as a so-called tapping operation (input operation of touching a predetermined position on the touch panel 11 and then releasing the touch before a predetermined period of time elapses), a dragging operation (input operation of touching a predetermined position on the touch panel 11 and then sliding the touch position in a predetermined direction), a flicking operation (input operation of touching a predetermined position on the touch panel 11, slightly sliding the touch position in a predetermined direction, and then releasing the touch (flicking with a finger)), a pinch-in operation (input operation of touching two predetermined positions separated from each other on the touch panel 11 and then sliding the touch positions in directions in which the touch positions approach each other), a pinch-out operation (input operation of touching two predetermined positions separated from each other on the touch panel 11 and then sliding the touch positions in directions in which the touch positions recede from each other), a press and hold operation (input operation of touching a predetermined position on the touch panel 11 and then maintaining the touch until a predetermined period of time elapses), and a double tapping operation (input operation of touching a predetermined position on the touch panel 11 and then repeating an input operation of releasing the touch twice before a predetermined period of time elapses). Meanwhile, the input operations described so far are merely examples, and the input specifying unit 13 may also specify other input operations.

Incidentally, the electronic device 10 of the present exemplary embodiment realizes a technique of allowing an input including direction information to be performed by the operation detection unit 12 and input specifying unit 13 mentioned above without sliding an operation body on the touch panel 11. Meanwhile, it is possible to perform an input including distance information and time information without sliding an operation body on the touch panel 11. Hereinafter, a detailed description will be given.

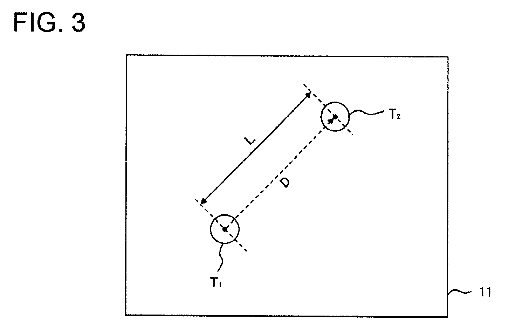

As illustrated in FIG. 3, the operation detection unit 12 detects a first operation T1 of touching a predetermined position of the touch panel 11 and then maintaining the touch position and touch state and a second operation T2 of touching another position on the touch panel 11 while the touch position and touch state of the first operation T1 are maintained after the first operation T1 is performed.

Then, the input specifying unit 13 calculates a direction on the basis of the position (first position) touched by the first operation T1 and the position (second position) touched by the second operation T2 in accordance with the detection of the second operation T2 by the operation detection unit 12 (or detection of the second operation T2 and an operation of releasing the touch of the second operation T2) to specify an input operation having direction information calculated. For example, the input specifying unit 13 calculates a direction from the first position toward the second position (D: see FIG. 3), a direction from the second position toward the first position, or a predetermined direction at an angle equal to or less than a predetermined angle (for example, 5 degrees) which is determined in advance from these directions. When at least one of the first position and the second position is a wide area, the input specifying unit 13 can calculate the above-mentioned direction using a predetermined position (center or the like) in the area as a representative value.

The input specifying unit 13 may further calculate a distance on the basis of the position (first position) touched by the first operation T1 and the position (second position) touched by the second operation T2 in accordance with the detection of the second operation T2 by the operation detection unit 12 (or detection of the second operation T2 and an operation of releasing the touch of the second operation T2) to specify an input operation further having distance information calculated. For example, the input specifying unit 13 calculates a distance between the first position and the second position (L: see FIG. 3), or a distance having a deviation within a predetermined value range with respect to the distance. When at least one of the first position and the second position is a wide area, the input specifying unit 13 can calculate the above-mentioned distance using a predetermined position (center or the like) in the area as a representative value.

In addition, the input specifying unit 13 may further calculate a time between a point in time when a touch is performed by the first operation T1 and a point in time when a touch is performed by the second operation T2 in accordance with the detection of the second operation T2 by the operation detection unit 12 (or detection of the second operation T2 and an operation of releasing the touch of the second operation T2) to specify an input operation further having time information calculated (first time information).

In addition, when the operation detection unit 12 detects the second operation T2 and then further detects an operation of releasing the touch of the second operation T2, the input specifying unit 13 may further calculate a time between a point in time when the touch is performed by the second operation T2 and a point in time when the touch is released in accordance with the detection of an operation of releasing the second operation by the operation detection unit 12 to specify an input operation further having time information calculated (second time information). The input specifying unit 13 may specify a type of input operation corresponding to the second time information among a plurality of types of input operation (for example, a dragging operation and a flicking operation).

As described above, according to the electronic device 10 of the present exemplary embodiment, it is possible to perform an input including direction information, distance information, time information, and the like without sliding an operation body on the touch panel 11. When an input operation including such pieces of information is specified, which process a computer of the electronic device 10 is caused to perform is a design matter. For example, a dragging operation or a flicking operation requiring sliding an operation body on the touch panel 11 may be replaced by the input operation.

For example, as illustrated in FIG. 3, when the operation detection unit 12 receives the first operation T1 of maintaining a state where the touch panel 11 is touched, the second operation T2 of touching another position on the touch panel 11 while maintaining the touch position and touch state of the first operation T1 after the first operation T1 is performed, and an operation of releasing the touch of the second operation T2 and when a time between a point in time when the touch is performed by the second operation and a point in time when the touch is released is longer than a predetermined period of time which is determined in advance, the input specifying unit 13 may specify the input operation as an input operation which is the same as a dragging operation of performing sliding from the position touched by the first operation T1 to the position touched by the second operation T2. The computer of the electronic device 10 can execute the same process as when a dragging operation of performing sliding from the position touched by the first operation T1 to the position touched by the second operation T2 is received. On the other hand, when a time between a point in time when the touch is performed by the second operation and a point in time when the touch is released is shorter than a predetermined period of time which is determined in advance, the input specifying unit 13 may specify the input operation as an input operation which is the same as a flicking operation of flicking the touch panel 11 from the position touched by the first operation T1 toward the position touched by the second operation T2. The computer of the electronic device 10 can execute the same process as when a flicking operation of flicking the touch panel 11 from the position touched by the first operation T1 toward the position touched by the second operation T2 is received.

That is, as illustrated in FIG. 3, when the operation detection unit 12 receives the first operation T1 of maintaining a state where the touch panel 11 is touched, the second operation T2 of touching another position on the touch panel 11 while maintaining the touch position and touch state of the first operation T1 after the first operation T1 is performed, and an operation of releasing the touch of the second operation T2, the input specifying unit 13 calculates a time between a point in time when the touch is performed by the second operation T2 and a point in time when the touch is released, in accordance with the detection of the second operation T2 and the detection of an operation of releasing the touch of the second operation T2. In addition, the above-mentioned direction (for example, D of FIG. 3) and distance (for example, L of FIG. 3) are calculated. Subsequently, the length of the calculated time is compared with that of a predetermined period of time which is stored in advance. An operation which is the same as a dragging operation in a predetermined direction over a predetermined distance or an input operation which is the same as a flicking operation in a predetermined direction is specified in accordance with a result of the comparison in the length of time.

According to the electronic device 10 described above of the present exemplary embodiment, it is possible to perform an input including direction information without sliding an operation body on the touch panel 11. In addition, it is also possible to input distance information and time information in addition to the direction information. Therefore, even when the electronic device 10 is used in conditions where an operation body cannot be slid on the touch panel 11, an operator can input the direction information and the distance information. As a result, an operation replacing an operation requiring sliding an operation body on the touch panel 11, for example, a dragging operation or a flicking operation is realized.

### <Second Exemplary Embodiment>

An example of a functional block diagram of an electronic device 10 of the present exemplary embodiment is illustrated in FIG. 2, similar to the first exemplary embodiment. A configuration of a touch panel 11 is the same as that in the first exemplary embodiment. Hereinafter, configurations of an operation detection unit 12 and an input specifying unit 13 will be described, but a description of the same components as those in the first exemplary embodiment will not be repeated.

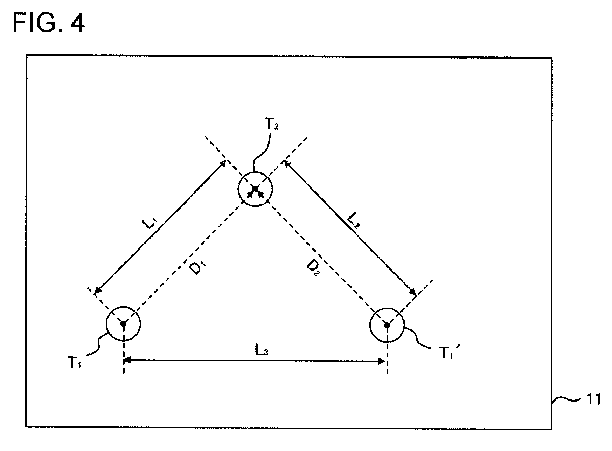

As illustrated in FIG. 4, the operation detection unit 12 detects first operations T1 and T1' of touching a plurality of positions separated from each other on the touch panel 11 at substantially the same time (within a predetermined time difference which is determined in advance) and maintaining the touch positions and the touch states, and a second operation T2 of touching another position on the touch panel 11 while maintaining the touch positions and touch states of the first operations T1 and T1' after the first operations T1 and T1' are performed.

Then, the input specifying unit 13 further calculates a distance on the basis of a plurality of positions touched by the first operations T1 and T1' in accordance with the detection of the second operation T2 by the operation detection unit 12 (or the detection of the second operation T2 and an operation of releasing the touch of the second operation T2) to specify an input operation further having distance information calculated. For example, the input specifying unit 13 calculates a distance between the position touched by the first operation T1 and the position touched by the first operation T1' (L3: see FIG. 4), or a distance having a deviation within a predetermined value range with respect to the distance. When at least one of the position touched by the first operation T1 and the position touched by the first operation T1' is a wide area, the input specifying unit 13 may calculate the above-mentioned distance using a predetermined position (center or the like) in the area as a representative value.

Meanwhile, the input specifying unit 13 may calculate a direction from a position touched by the first operation T1 toward a position touched by the second operation T2 (D1: see FIG. 4), a direction from the position touched by the second operation T2 toward the position touched by the first operation T1, or a predetermined direction at an angle equal to or less than a predetermined angle (for example, 5 degrees) which is determined in advance from these directions and may specify an input operation further having the calculated information, according to the configuration in the first exemplary embodiment. Further, the input specifying unit 13 may calculate a direction from a position touched by the first operation T1' toward the position touched by the second operation T2 (D2: see FIG. 4), a direction from the position touched by the second operation T2 toward the position touched by the first operation T1', or a predetermined direction at an angle equal to or less than a predetermined angle (for example, 5 degrees) which is determined in advance from these directions and may specify an input operation further having the calculated information, according to the configuration in the first exemplary embodiment.

In addition, the input specifying unit 13 may calculate a distance between the position touched by the first operation T1 and the position touched by the second operation T2 (L1: see FIG. 4) or a distance having a deviation within a predetermined value range with respect to the distance and may specify an input operation further having the calculated information, according to the configuration in the first exemplary embodiment. Further, the input specifying unit 13 may calculate a distance between the position touched by the first operation T1' and the position touched by the second operation T2 (L2: see FIG. 4) or a distance having a deviation within a predetermined value range with respect to the distance and may specify an input operation further having the calculated information, according to the configuration in the first exemplary embodiment.

As described above, according to the electronic device 10 of the present exemplary embodiment, it is possible to perform an input including direction information, distance information, time information, and the like without sliding an operation body on the touch panel 11. When an input operation including such pieces of information is specified, which process a computer of the electronic device 10 is caused to perform is a design matter. For example, a pinch-in operation requiring sliding an operation body on the touch panel 11 may be replaced by the input operation.

For example, as illustrated in FIG. 4, when the operation detection unit 12 detects the first operations T1 and T1' of touching a plurality of (for example, two) positions separated from each other on the touch panel 11 at substantially the same time (within a predetermined time difference which is determined in advance) and maintaining the touch states, and the second operation T2 of touching another position on the touch panel 11 while maintaining the touch positions and touch states of the first operations T1 and T1' after the first operations T1 and T1' are performed, the input specifying unit 13 may specify the operations as an input operation which is the same as a pinch-in operation. Any one of the calculable distances L1, L2, and L3, a value obtained by multiplying a predetermined correction coefficient by any of the distances, or a value which is calculable from the distances may be specified as a sliding amount of a pinch-in operation.

According to the electronic device 10 described above of the present exemplary embodiment, the same operational effects that are the same as those in the first exemplary embodiment are realized. In addition, an operation replacing a pinch-in operation requiring sliding an operation body on the touch panel 11 is realized.

### <Third Exemplary Embodiment>

An example of a functional block diagram of an electronic device 10 of the present exemplary embodiment is illustrated in FIG. 2, similar to the first exemplary embodiment. A configuration of a touch panel 11 is the same as that in the first exemplary embodiment. Hereinafter, configurations of an operation detection unit 12 and an input specifying unit 13 will be described, but a description of the same components as those in the first and second exemplary embodiments will not be repeated.

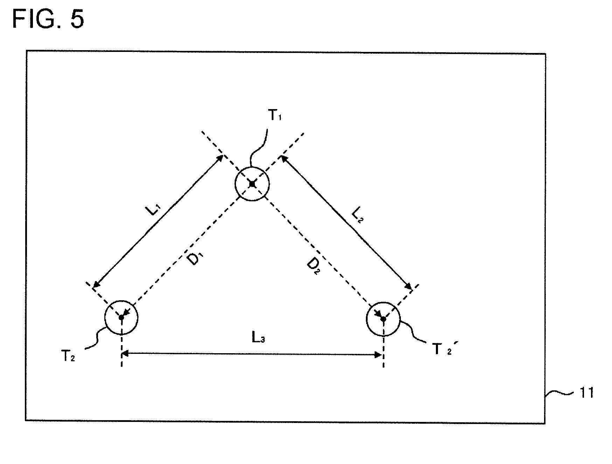

As illustrated in FIG. 5, the operation detection unit 12 detects a first operation T1 of maintaining a position and state of which a touch is performed on a touch panel 11, and second operations T2 and T2' of touching a plurality of positions separated from each other on the touch panel 11 at substantially the same time (within a predetermined time difference which is determined in advance) while maintaining the touch position and touch state of the first operation T1.

Then, the input specifying unit 13 further calculates a distance on the basis of a plurality of positions touched by the second operations T2 and T2' in accordance with the detection of the second operation T2 by the operation detection unit 12 (or the detection of the second operation T2 and an operation of releasing the touch of the second operation T2) to specify an input operation further having distance information calculated. For example, the input specifying unit 13 calculates a distance between the position touched by the second operation T2 and the position touched by the second operation T2' (L3: see FIG. 5) or a distance having a deviation within a predetermined value range with respect to the distance. When at least one of the position touched by the second operation T1 and the position touched by the second operation T1' is a wide area, the input specifying unit 13 may calculate the above-mentioned distance using a predetermined position (center or the like) in the area as a representative value.

Meanwhile, the input specifying unit 13 may calculate a direction from a position touched by the first operation T1 toward a position touched by the second operation T2 (D1: see FIG. 5), a direction from the position touched by the second operation T2 toward the position touched by the first operation T1, or a predetermined direction at an angle equal to or less than a predetermined angle (for example, 5 degrees) which is determined in advance from these directions and may specify an input operation further having the calculated information, according to the configuration in the first exemplary embodiment. Further, the input specifying unit 13 may calculate a direction from a position touched by the first operation T1 toward a position touched by the second operation T2' (D2: see FIG. 5), a direction from the position touched by the second operation T2' toward the position touched by the first operation T1, or a predetermined direction at an angle equal to or less than a predetermined angle (for example, 5 degrees) which is determined in advance from these directions and may specify an input operation further having the calculated information, according to the configuration in the first exemplary embodiment.

In addition, the input specifying unit 13 may calculate a distance between the position touched by the first operation T1 and the position touched by the second operation T2 (L1: see FIG. 5) or a distance having a deviation within a predetermined value range with respect to the distance and may specify an input operation further having the calculated information, according to the configuration in the first exemplary embodiment. Further, the input specifying unit 13 may calculate a distance between the position touched by the first operation T1 and the position touched by the second operation T2' (L2: see FIG. 5) or a distance having a deviation within a predetermined value range with respect to the distance and may specify an input operation further having the calculated information, according to the configuration in the first exemplary embodiment.

As described above, according to the electronic device 10 of the present exemplary embodiment, it is possible to perform an input including direction information, distance information, time information, and the like without sliding an operation body on the touch panel 11. When an input operation including such pieces of information is specified, which process a computer of the electronic device 10 is caused to perform is a design matter. F or example, a pinch-in operation requiring sliding an operation body on the touch panel 11 may be replaced by the input operation.

For example, as illustrated in FIG. 5, when the operation detection unit 12 detects the first operation T1 of touching one position on the touch panel 11 and maintaining the touch state, and the second operations T2 and T2' of touching a plurality of (for example, two) positions separated from each other on the touch panel 11 at substantially the same time (within a predetermined time difference which is determined in advance) while maintaining the touch position and touch state of the first operation T1 after the first operation T1 is performed, the input specifying unit 13 may make specify the operations as an input operation which is the same as a pinch-out operation. Any one of the calculable distances L1, L2, and L3, a value obtained by multiplying a predetermined correction coefficient by any of the distances, or a value which is calculable from the distances may be specified as a sliding amount of a pinch-out operation.

According to the electronic device 10 described above of the present exemplary embodiment, operational effects that are the same as those in the first exemplary embodiment are realized. In addition, an operation replacing a pinch-out operation requiring sliding an operation body on the touch panel 11 is realized.

### <Fourth Exemplary Embodiment>

An example of a functional block diagram of an electronic device 10 of the present exemplary embodiment is illustrated in FIG. 2, similar to the first exemplary embodiment. A configuration of a touch panel 11 is the same as that in the first exemplary embodiment. Hereinafter, configurations of an operation detection unit 12 and an input specifying unit 13 will be described, but a description of the same components as those in the first to third exemplary embodiments will not be repeated.

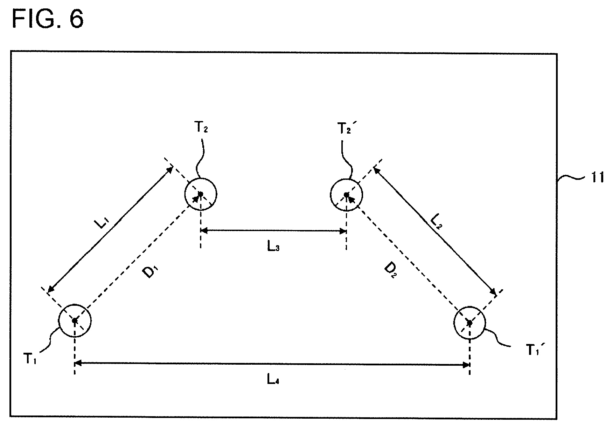

As illustrated in FIG. 6, the operation detection unit 12 detects first operations T1 and T1' of touching a plurality of positions separated from each other on a touch panel 11 at substantially the same time (within a predetermined time difference which is determined in advance) and of maintaining the touch positions and the touch states, and second operations T2 and T2' of touching a plurality of positions separated from each other on the touch panel 11 at substantially the same time (within a predetermined time difference which is determined in advance) while maintaining the touch positions and touch states of the first operations T1 and T1' after the first operations T1 and T1' are performed.

Then, the input specifying unit 13 further calculates a distance on the basis of a plurality of positions touched by the first operations T1 and T1' in accordance with the detection of the second operation T2 by the operation detection unit 12 (or the detection of the second operation T2 and an operation of releasing the touch of the second operation T2) to specify an input operation further having distance information calculated. For example, the input specifying unit 13 calculates a distance between the position touched by the first operation T1 and the position touched by the first operation T1' (L4: see FIG. 6), or a distance having a deviation within a predetermined value range with respect to the distance. When at least one of the position touched by the first operation T1 and the position touched by the first operation T1' is a wide area, the input specifying unit 13 may calculate the above-mentioned distance using a predetermined position (center or the like) in the area as a representative value.

In addition, the input specifying unit 13 further calculates a distance on the basis of a plurality of positions touched by the second operations T2 and T2' in accordance with the detection of the second operation T2 by the operation detection unit 12 (or the detection of the second operation T2 and an operation of releasing the touch of the second operation T2) to specify an input operation further having distance information calculated. For example, the input specifying unit 13 calculates a distance between the position touched by the second operation T2 and the position touched by the second operation T2' (L3: see FIG. 6) or a distance having a deviation within a predetermined value range with respect to the distance. When at least one of the position touched by the second operation T1 and the position touched by the second operation T1' is a wide area, the input specifying unit 13 may calculate the above-mentioned distance using a predetermined position (center or the like) in the area as a representative value.

Meanwhile, the input specifying unit 13 may calculate a direction from a position touched by the first operation T1 toward a closer position out of a position touched by the second operation T2 and a position touched by the second operation T2' (D1: see FIG. 6), a direction opposite thereto, or a predetermined direction at an angle equal to or less than a predetermined angle (for example, 5 degrees) which is determined in advance from these directions and may specify an input operation further having the calculated information, according to the configuration in the first exemplary embodiment. Further, the input specifying unit 13 may calculate a direction from a position touched by the first operation T1' toward a closer position out of the position touched by the second operation T2 and the position touched by the second operation T2' (D2: see FIG. 6), a direction opposite thereto, or a predetermined direction at an angle equal to or less than a predetermined angle (for example, 5 degrees) which is determined in advance from these directions and may specify an input operation further having the calculated information, according to the configuration in the first exemplary embodiment.

In addition, the input specifying unit 13 may calculate a distance between the position touched by the first operation T1 and a closer position out of the position touched by the second operation T2 and the position touched by the second operation T2' (L1: see FIG. 6) or a distance having a deviation within a predetermined value range with respect to the distance and may specify an input operation further having the calculated information, according to the configuration in the first exemplary embodiment. Further, the input specifying unit 13 may calculate a distance between the position touched by the first operation T1' and a closer position out of the position touched by the second operation T2 and the position touched by the second operation T2' (L2: see FIG. 6) or a distance having a deviation within a predetermined value range with respect to the distance and may specify an input operation further having the calculated information, according to the configuration in the first exemplary embodiment.

As described above, according to the electronic device 10 of the present exemplary embodiment, it is possible to perform an input including direction information, distance information, time information, and the like without sliding an operation body on the touch panel 11. When an input operation including such pieces of information is specified, which process a computer of the electronic device 10 is caused to perform is a design matter. For example, a pinch-in operation or a pinch-out operation requiring sliding an operation body on the touch panel 11 may be replaced by the input operation.

For example, as illustrated in FIG. 6, when the operation detection unit 12 detects the first operations T1 and T1' of touching a plurality of (for example, two) positions separated from each other on the touch panel 11 at substantially the same time (within a predetermined time difference which is determined in advance) and maintaining the touch states and the second operations T2 and T2' of touching a plurality of (for example, two) positions separated from each other on the touch panel 11 while maintaining the touch positions and touch states of the first operations T1 and T1' after the first operations T1 and T1' are performed, the input specifying unit 13 calculates a distance between the positions touched by the first operations T1 and T1' and a distance between the positions touched by the second operations T2 and T2', and compares the sizes of the calculated values with each other.

When the distance between the positions touched by the first operations T1 and T1' is greater (see FIG. 6), the input specifying unit 13 may make a specification be an input operation which is the same as a pinch-in operation. Any one of the calculable distances L1, L2, L3, and L4, a value obtained by multiplying a predetermined correction coefficient by any of the distances, or a value which is calculable from the distances may be specified as a sliding amount of a pinch-in operation.

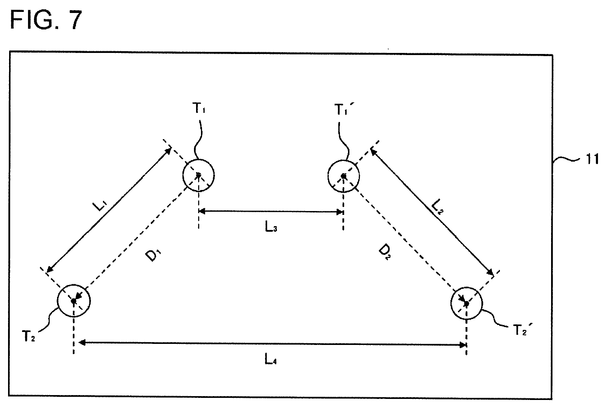

On the other hand, when the distance between the positions touched by the second operations T2 and T2' is greater (see FIG. 7), the input specifying unit 13 may specify the operations as an input operation which is the same as a pinch-out operation. Any one of the calculable distances L1, L2, L3, and L4, a value obtained by multiplying a predetermined correction coefficient by any of the distances, or a value which is calculable from the distances may be specified as a sliding amount of a pinch-out operation.

According to the electronic device 10 described above of the present exemplary embodiment, operational effects that are the same as those in the first exemplary embodiment are realized. In addition, an operation replacing a pinch-in operation or a pinch-out operation requiring sliding an operation body on the touch panel 11 is realized.

Hereinafter, a description of an example of a reference configuration will be added.
1. An electronic device including:
   a touch panel;
   an operation detection unit that detects an operation through the touch panel; and
   an input specifying unit that specifies an input operation on the basis of the operation detected by the operation detection unit,
   wherein the operation detection unit detects a first operation of maintaining a state where the touch panel is touched, and a second operation of touching another position on the touch panel while maintaining a position and a state of the first operation, and
   wherein the input specifying unit calculates a direction on the basis of a position touched by the first operation and a position touched by the second operation in accordance with the detection of the second operation by the operation detection unit, and specifies an input operation having direction information calculated.
2. The electronic device according to 1, wherein the input specifying unit further calculates a distance on the basis of the position touched by the first operation and the position touched by the second operation in accordance with the detection of the second operation by the operation detection unit, and specifies an input operation further having distance information calculated.
3. The electronic device according to 1 or 2, wherein the input specifying unit further calculates a time between a point in time when the touch is performed by the first operation and a point in time when the touch is performed by the second operation in accordance with the detection of the second operation by the operation detection unit, and specifies an input operation further having first time information calculated.
4. The electronic device according to any one of 1 to 3,
   wherein the operation detection unit detects the second operation and then further detects an operation of releasing the touch of the second operation, and
   wherein the input specifying unit further calculates a time between a point in time when the touch is performed by the second operation and a point in time when the touch is released in accordance with the detection of the operation of releasing the second operation by the operation detection unit, and specifies an input operation further having second time information calculated.
5. The electronic device according to 4, wherein the input specifying unit specifies a type of input operation corresponding to the second time information among a plurality of types of input operation.
6. The electronic device according to any one of 1 to 5,
   wherein the operation detection unit detects the first operation of maintaining a state where a plurality of positions separated from each other on the touch panel are touched, and
   wherein the input specifying unit further calculates a distance on the basis of the plurality of positions touched by the first operation in accordance with the detection of the second operation by the operation detection unit, and specifies an input operation further having distance information calculated.
7. The electronic device according to any one of 1 to 6,
   wherein the operation detection unit detects the second operation of touching a plurality of positions separated from each other on the touch panel while maintaining a position and a state of the first operation, and
   wherein the input specifying unit further calculates a distance on the basis of the plurality of positions touched by the second operation in accordance with the detection of the second operation by the operation detection unit, and specifies an input operation further having distance information calculated.
8. The electronic device according to any one of 1 to 7,
   wherein the operation detection unit detects the second operation and then further detects an operation of releasing the touch of the second operation, and
   wherein the input specifying unit calculates a time between a point in time when the touch is performed by the second operation and a point in time when the touch is released in accordance with the detection of the second operation and the detection of the operation of releasing the touch of the second operation, compares a length of the calculated time with a length of a predetermined period of time, and specifies an input operation which is the same as a dragging operation of performing sliding from the position touched by the first operation to the position touched by the second operation when the calculated time is longer than the predetermined period of time.
9. The electronic device according to any one of 1 to 8,
   wherein the operation detection unit detects the second operation and then further detects an operation of releasing the touch of the second operation, and
   wherein the input specifying unit calculates a time between a point in time when the touch is performed by the second operation and a point in time when the touch is released in accordance with the detection of the second operation and the detection of the operation of releasing the touch of the second operation, compares a length of the calculated time with a length of a predetermined period of time, and specifies an input operation which is the same as a flicking operation of flicking the touch panel from the position touched by the first operation toward the position touched by the second operation when the calculated time is shorter than the predetermined period of time.
10. The electronic device according to any one of 1 to 9,
   wherein the operation detection unit detects the first operation of maintaining a state where two positions separated from each other on the touch panel are touched, and the second operation of touching two positions separated from each other on the touch panel while maintaining a position and a state of the first operation, and
   wherein the input specifying unit calculates a distance between the two positions touched by the first operation and a distance between the two positions touched by the second operation in accordance with the detection of the second operation by the operation detection unit, compares lengths of the calculated two distances with each other, and specifies an input operation which is the same as a pinch-in operation when the distance between the two positions touched by the first operation is greater.
11. The electronic device according to any one of 1 to 10,
   wherein the operation detection unit detects the first operation of maintaining a state where two positions separated from each other on the touch panel are touched, and the second operation of touching two positions separated from each other on the touch panel while maintaining a position and a state of the first operation, and
   wherein the input specifying unit calculates a distance between the two positions touched by the first operation and a distance between the two positions touched by the second operation in accordance with the detection of the second operation by the operation detection unit, compares lengths of the calculated two distances with each other, and specifies an input operation which is the same as a pinch-out operation when the distance between the two positions touched by the second operation is greater.
12. A program for an electronic device including a touch panel, the program causing:
   a computer to function as an operation detection unit that detects an operation through the touch panel, and an input specifying unit that specifies an input operation on the basis of the operation detected by the operation detection unit;
   the operation detection unit to detect a first operation of maintaining a state where the touch panel is touched and a second operation of touching another position on the touch panel while maintaining a position and a state of the first operation; and
   the input specifying unit to calculate a direction on the basis of a position touched by the first operation and a position touched by the second operation in accordance with the detection of the second operation by the operation detection unit and to specify an input operation having direction information calculated.
12-2. The program according to 12, further causing the input specifying unit to further calculate a distance on the basis of the position touched by the first operation and the position touched by the second operation in accordance with the detection of the second operation by the operation detection unit and to specify an input operation further having distance information calculated.
12-3. The program according to 12 or 12-2, further causing the input specifying unit to further calculate a time between a point in time when the touch is performed by the first operation and a point in time when the touch is performed by the second operation in accordance with the detection of the second operation by the operation detection unit and to specify an input operation further having first time information calculated.
12-4. The program according to any one of 12 to 12-3, further causing:
   the operation detection unit to detect the second operation and then to further detect an operation of releasing the touch of the second operation; and
   the input specifying unit to further calculate a time between a point in time when the touch is performed by the second operation and a point in time when the touch is released in accordance with the detection of the operation of releasing the second operation by the operation detection unit and to specify an input operation further having second time information calculated.
12-5. The program according to 12-4, further causing the input specifying unit to specify a type of input operation corresponding to the second time information among a plurality of types of input operation.
12-6. The program according to any one of 12 to 12-5, further causing:
   the operation detection unit to detect the first operation of maintaining a state where a plurality of positions separated from each other on the touch panel are touched; and
   the input specifying unit to further calculate a distance on the basis of the plurality of positions touched by the first operation in accordance with the detection of the second operation by the operation detection unit and to specify an input operation further having distance information calculated.
12-7. The program according to any one of 12 to 12-6, further causing:
   the operation detection unit to detect the second operation of touching a plurality of positions separated from each other on the touch panel while maintaining a position and a state of the first operation; and
   the input specifying unit to further calculate a distance on the basis of the plurality of positions touched by the second operation in accordance with the detection of the second operation by the operation detection unit and to specify an input operation further having distance information calculated.
12-8. The program according to any one of 12 to 12-7, further causing:
   the operation detection unit to detect the second operation and then to further detect an operation of releasing the touch of the second operation; and
   the input specifying unit to calculate a time between a point in time when the touch is performed by the second operation and a point in time when the touch is released in accordance with the detection of the second operation and the detection of the operation of releasing the touch of the second operation, to compare a length of the calculated time with a length of a predetermined period of time, and to specify an input operation which is the same as a dragging operation of performing sliding from the position touched by the first operation to the position touched by the second operation when the calculated time is longer than the predetermined period of time.
12-9. The program according to any one of 12 to 12-8, further causing:
   the operation detection unit to detect the second operation and then to further detect an operation of releasing the touch of the second operation; and
   the input specifying unit to calculate a time between a point in time when the touch is performed by the second operation and a point in time when the touch is released in accordance with the detection of the second operation and the detection of the operation of releasing the touch of the second operation, to compare a length of the calculated time with a length of a predetermined period of time, and to specify an input operation which is the same as a flicking operation of flicking the touch panel from the position touched by the first operation toward the position touched by the second operation when the calculated time is shorter than the predetermined period of time.
12-10. The program according to any one of 12 to 12-9, further causing:
   the operation detection unit to detect the first operation of maintaining a state where two positions separated from each other on the touch panel are touched, and the second operation of touching two positions separated from each other on the touch panel while maintaining a position and a state of the first operation; and
   the input specifying unit to calculate a distance between the two positions touched by the first operation and a distance between the two positions touched by the second operation in accordance with the detection of the second operation by the operation detection unit, to compare lengths of the calculated two distances with each other, and to specify an input operation which is the same as a pinch-in operation when the distance between the two positions touched by the first operation is greater.
12-11. The program according to any one of 12 to 12-10, further causing:
   the operation detection unit to detect the first operation of maintaining a state where two positions separated from each other on the touch panel are touched, and the second operation of touching two positions separated from each other on the touch panel while maintaining a position and a state of the first operation; and
   the input specifying unit to calculate a distance between the two positions touched by the first operation and a distance between the two positions touched by the second operation in accordance with the detection of the second operation by the operation detection unit, to compare lengths of the calculated two distances with each other, and to specify an input operation which is the same as a pinch-out operation when the distance between the two positions touched by the second operation is greater.
13. An input receiving method of causing an electronic device including a touch panel to perform:
   an operation detection process of detecting an operation through the touch panel; and
   an input specifying process of specifying an input operation on the basis of the operation detected in the operation detection process,
   wherein in the operation detection process, a first operation of maintaining a state where the touch panel is touched and a second operation of touching another position on the touch panel while maintaining a position and a state of the first operation are detected, and
   wherein in the input specifying process, a direction is calculated on the basis of a position touched by the first operation and a position touched by the second operation in accordance with the detection of the second operation in the operation detection process, and an input operation having direction information calculated is specified.
13-2. The input receiving method according to 13, wherein in the input specifying process, a distance is further calculated on the basis of a position touched by the first operation and a position touched by the second operation in accordance with the detection of the second operation in the operation detection process, and an input operation further having distance information calculated is specified.
13-3. The input receiving method according to 13 or 13-2, wherein in the input specifying process, a time between a point in time when the touch is performed by the first operation and a point in time when the touch is performed by the second operation is further calculated in accordance with the detection of the second operation in the operation detection process, and an input operation further having first time information calculated is specified.
13-4. The input receiving method according to any one of 13 to 13-3,
   wherein in the operation detection process, an operation of releasing the touch of the second operation is further detected after the second operation is detected, and
   wherein in the input specifying process, a time between a point in time when the touch is performed by the second operation and a point in time when the touch is released is further calculated in accordance with the detection of the operation of releasing the second operation in the operation detection process, and an input operation further having second time information calculated is specified.
13-5. The input receiving method according to 13-4, wherein in the input specifying process, a type of input operation corresponding to the second time information is specified among a plurality of types of input operation.
13-6. The input receiving method according to any one of 13 to 13-5,
   wherein in the operation detection process, the first operation of maintaining a state where a plurality of positions separated from each other on the touch panel are touched is detected, and
   wherein in the input specifying process, a distance is further calculated on the basis of the plurality of positions touched by the first operation in accordance with the detection of the second operation in the operation detection unit, and an input operation further having distance information calculated is specified.
13-7. The input receiving method according to any one of 13 to 13-6,
   wherein in the operation detection process, the second operation of touching a plurality of positions separated from each other on the touch panel while maintaining a position and a state of the first operation is detected, and
   wherein in the input specifying process, a distance is further calculated on the basis of the plurality of positions touched by the second operation in accordance with the detection of the second operation in the operation detection process, and an input operation further having distance information calculated is specified.
13-8. The input receiving method according to any one of 13 to 13-7,
   wherein in the operation detection process, an operation of releasing the touch of the second operation is further detected after the second operation is detected, and
   wherein in the input specifying process, a time between a point in time when the touch is performed by the second operation and a point in time when the touch is released is calculated in accordance with the detection of the second operation and the detection of the operation of releasing the touch of the second operation, a length of the calculated time is compared with a length of a predetermined period of time, and an input operation which is the same as a dragging operation of performing sliding from the position touched by the first operation to the position touched by the second operation is specified when the calculated time is longer than the predetermined period of time.
13-9. The input receiving method according to any one of 13 to 13-8,
   wherein in the operation detection process, an operation of releasing the touch of the second operation is further detected after the second operation is detected, and
   wherein in the input specifying process, a time between a point in time when the touch is performed by the second operation and a point in time when the touch is released is calculated in accordance with the detection of the second operation and the detection of the operation of releasing the touch of the second operation, a length of the calculated time is compared with a length of a predetermined period of time, and an input operation which is the same as a flicking operation of flicking the touch panel from the position touched by the first operation toward the position touched by the second operation is specified when the calculated time is shorter than the predetermined period of time.
13-10. The input receiving method according to any one of 13 to 13-9,
   wherein in the operation detection process, the first operation of maintaining a state where two positions separated from each other on the touch panel are touched and the second operation of touching two positions separated from each other on the touch panel while maintaining a position and a state of the first operation are detected, and
   wherein in the input specifying process, a distance between the two positions touched by the first operation and a distance between the two positions touched by the second operation are calculated in accordance with the detection of the second operation in the operation detection process, lengths of the calculated two distances are compared with each other, and an input operation which is the same as a pinch-in operation is specified when the distance between the two positions touched by the first operation is greater.
13-11. The input receiving method according to any one of 13 to 13-10,
   wherein in the operation detection process, the first operation of maintaining a state where two positions separated from each other on the touch panel are touched and the second operation of touching two positions separated from each other on the touch panel while maintaining a position and a state of the first operation are detected, and
   wherein in the input specifying process, a distance between the two positions touched by the first operation and a distance between the two positions touched by the second operation are calculated in accordance with the detection of the second operation in the operation detection process, lengths of the calculated two distances are compared with each other, and an input operation which is the same as a pinch-out operation is specified when the distance between the two positions touched by the second operation is greater.

The application is based on Japanese Patent Application No. 2013-130559 filed on June 21, 2013, the content of which is incorporated herein by reference.

## Claims

1. An electronic device comprising:
a touch panel;
an operation detection unit that detects an operation through the touch panel; and
an input specifying unit that specifies an input operation on the basis of the operation detected by the operation detection unit,
wherein the operation detection unit detects a first operation of maintaining a state where the touch panel is touched, and a second operation of touching another position on the touch panel while maintaining a position and a state of the first operation, and
wherein the input specifying unit calculates a direction on the basis of a position touched by the first operation and a position touched by the second operation in accordance with the detection of the second operation by the operation detection unit, and specifies an input operation having direction information calculated.

2. The electronic device according to claim 1, wherein the input specifying unit further calculates a distance on the basis of the position touched by the first operation and the position touched by the second operation in accordance with the detection of the second operation by the operation detection unit, and specifies an input operation further having distance information calculated.

3. The electronic device according to claim 1 or 2, wherein the input specifying unit further calculates a time between a point in time when the touch is performed by the first operation and a point in time when the touch is performed by the second operation in accordance with the detection of the second operation by the operation detection unit, and specifies an input operation further having first time information calculated.

4. The electronic device according to any one of claims 1 to 3,
wherein the operation detection unit detects the second operation and then further detects an operation of releasing the touch of the second operation, and
wherein the input specifying unit further calculates a time between a point in time when the touch is performed by the second operation and a point in time when the touch is released in accordance with the detection of the operation of releasing the second operation by the operation detection unit, and specifies an input operation further having second time information calculated.

5. The electronic device according to claim 4, wherein the input specifying unit specifies a type of input operation corresponding to the second time information among a plurality of types of input operation.

6. The electronic device according to any one of claims 1 to 5,
wherein the operation detection unit detects the first operation of maintaining a state where a plurality of positions separated from each other on the touch panel are touched, and
wherein the input specifying unit further calculates a distance on the basis of the plurality of positions touched by the first operation in accordance with the detection of the second operation by the operation detection unit, and specifies an input operation further having distance information calculated.

7. The electronic device according to any one of claims 1 to 6,
wherein the operation detection unit detects the second operation of touching a plurality of positions separated from each other on the touch panel while maintaining a position and a state of the first operation, and
wherein the input specifying unit further calculates a distance on the basis of the plurality of positions touched by the second operation in accordance with the detection of the second operation by the operation detection unit, and specifies an input operation further having distance information calculated.

8. The electronic device according to any one of claims 1 to 7,
wherein the operation detection unit detects the second operation and then further detects an operation of releasing the touch of the second operation, and
wherein the input specifying unit calculates a time between a point in time when the touch is performed by the second operation and a point in time when the touch is released in accordance with the detection of the second operation and the detection of the operation of releasing the touch of the second operation, compares a length of the calculated time with a length of a predetermined period of time, and specifies an input operation which is the same as a dragging operation of performing sliding from the position touched by the first operation to the position touched by the second operation when the calculated time is longer than the predetermined period of time.

9. The electronic device according to any one of claims 1 to 8,
wherein the operation detection unit detects the second operation and then further detects an operation of releasing the touch of the second operation, and
wherein the input specifying unit calculates a time between a point in time when the touch is performed by the second operation and a point in time when the touch is released in accordance with the detection of the second operation and the detection of the operation of releasing the touch of the second operation, compares a length of the calculated time with a length of a predetermined period of time, and specifies an input operation which is the same as a flicking operation of flicking the touch panel from the position touched by the first operation toward the position touched by the second operation when the calculated time is shorter than the predetermined period of time.

10. The electronic device according to any one of claims 1 to 9,
wherein the operation detection unit detects the first operation of maintaining a state where two positions separated from each other on the touch panel are touched, and the second operation of touching two positions separated from each other on the touch panel while maintaining a position and a state of the first operation, and
wherein the input specifying unit calculates a distance between the two positions touched by the first operation and a distance between the two positions touched by the second operation in accordance with the detection of the second operation by the operation detection unit, compares lengths of the calculated two distances with each other, and specifies an input operation which is the same as a pinch-in operation when the distance between the two positions touched by the first operation is greater.

11. The electronic device according to any one of claims 1 to 10,
wherein the operation detection unit detects the first operation of maintaining a state where two positions separated from each other on the touch panel are touched, and the second operation of touching two positions separated from each other on the touch panel while maintaining a position and a state of the first operation, and
wherein the input specifying unit calculates a distance between the two positions touched by the first operation and a distance between the two positions touched by the second operation in accordance with the detection of the second operation by the operation detection unit, compares lengths of the calculated two distances with each other, and specifies an input operation which is the same as a pinch-out operation when the distance between the two positions touched by the second operation is greater.

12. A program for an electronic device including a touch panel, the program causing:
a computer to function as an operation detection unit that detects an operation through the touch panel, and an input specifying unit that specifies an input operation on the basis of the operation detected by the operation detection unit;
the operation detection unit to detect a first operation of maintaining a state where the touch panel is touched and a second operation of touching another position on the touch panel while maintaining a position and a state of the first operation; and
the input specifying unit to calculate a direction on the basis of a position touched by the first operation and a position touched by the second operation in accordance with the detection of the second operation by the operation detection unit and to specify an input operation having direction information calculated.

13. An input receiving method of causing an electronic device including a touch panel to perform:
an operation detection process of detecting an operation through the touch panel; and
an input specifying process of specifying an input operation on the basis of the operation detected in the operation detection process,
wherein in the operation detection process, a first operation of maintaining a state where the touch panel is touched and a second operation of touching another position on the touch panel while maintaining a position and a state of the first operation are detected, and
wherein in the input specifying process, a direction is calculated on the basis of a position touched by the first operation and a position touched by the second operation in accordance with the detection of the second operation in the operation detection process, and an input operation having direction information calculated is specified.
